# EUROPEAN PATENT SPECIFICATION

(11) **EP 3 771 237 B1**
(45) Date of publication and mention of the grant of the patent: **19.02.2025**
(21) Application number: 19187971.7
(22) Date of filing: 24.07.2019
(51) Int. Cl.: H04N 21/414, H04N 21/436, H04N 21/4363, H04L 67/54, H04W 84/00, H04N 21/214, H04N 7/18, H04L 67/12, H04W 4/42, H04W 4/48, H04W 48/16

(54) **WIRELESS COMMUNICATION MANAGEMENT APPARATUS, WIRELESS COMMUNICATION MANAGEMENT SYSTEM, AND WIRELESS COMMUNICATION MANAGEMENT METHOD**
DRAHTLOSKOMMUNIKATIONSVERWALTUNGSVORRICHTUNG, DRAHTLOSKOMMUNIKATIONSVERWALTUNGSSYSTEM UND DRAHTLOSKOMMUNIKATIONSVERWALTUNGSVERFAHREN
APPAREIL, SYSTÈME ET PROCÉDÉ DE GESTION DE COMMUNICATION SANS FIL

(43) Date of publication of application: 27.01.2021
(73) Proprietor: Panasonic Intellectual Property Management Co., Ltd., Osaka-shi, Osaka 540-6207 (JP)
(72) Inventor: SATO, Daiki, Osaka-shi, Osaka 540-6207 (JP)
(74) Representative: Grünecker Patent- und Rechtsanwälte PartG mbB

(56) References cited:
- US-A1- 2014 282 684
- US-A1- 2016 295 619
- US-A1- 2017 182 957
- US-A1- 2018 232 565
- US-A1- 2018 317 071

## Description

### TECHNICAL FIELD

The present disclosure relates to a wireless communication management apparatus, a wireless communication management system, and a wireless communication management method.

### BACKGROUND ART

For example, EP2774850A2 discloses a method of displaying passenger information on a monitor at each seat using an in-flight entertainment (IFE) system.

Patent Application US 2014/0282684 A1 relates to in-flight entertainment (IFE) communication for providing content to a passenger via a personal electronic device (PED). A PED is registered with the IFE system by generating a registration token image for each passenger seat display by the IFE controller. The passenger places the PED adjacent to the seat display and senses the token image with a PED built-in optical sensor. Based on the sensed registration token image, the PED sends via NFC a registration ID to the IFE controller. After registration, the user may select among functions, such as operating (i) the PED as remote control for controlling the displayed video, (ii) the PED video source to display video on the seat display, and (iii) the PED display to display thereon video. Patent Application US 2018/0317071 A1 relates to in-flight entertainment (IFE) services and in particular, to provision of wireless connectivity between passenger terminals and video displays, controlled by a central Bluetooth (BT) controller. The wireless connectivity between passenger seat displays and user PEDS having a Bluetooth and/or WiFi capability is controlled. The entertainment system includes video display units establishing Bluetooth connections with user terminals. The user terminals (PEDs) initiate BT connections with the displays by transmitting BT connection requests to the displays. The central BT controller receives the connection authorization requests from the displays and generates connection authorization decisions based on a BT connection rule to the PED characteristics. The PEDs are identified from the connection authorization requests. The connection authorization decisions are used to control whether BT connections are established between the PEDs and the displays, and to control what security mode levels are used when establishing and using the BT connections

The document US 2016/295619 A1 describes a communication system which includes a first electronic device and at least one second electronic device. The second electronic device has a communication function section having a function for performing communication and an identification image presentation section which provides, at a position that can be captured from outside, an identification image having device information including the type of a communication standard for the communication to be performed by the communication function section.

### BRIEF SUMMARY

In recent years, many of the passengers carry their own wireless terminals such as smartphones. Passengers have a demand for using content etc. from the IFE system by allowing their wireless terminals to communicate with the IFE system. However, in moving objects such as aircrafts, the use of radio is often restricted in light of safety or by laws and regulations of countries. Furthermore, in an environment where passengers are not used, even if wireless communication is available, it may take time for passengers to make a wireless connection and thereby make passengers feel stressed.

The present disclosure provides a wireless communication management apparatus, a wireless communication management system, and a wireless communication management method that are effective to make the wireless connection accessible to users even in an environment where the use of wireless communication is restricted.

The present invention is defined by the features of the independent claims, with preferred embodiments being specified in the dependent claims. References to embodiments which do not fall under the scope of the claims are to be understood as examples useful for understanding the invention.

### BRIEF DESCRIPTION OF DRAWINGS

FIG. 1 is a layout diagram of the wireless communication management system according to Embodiment 1.
FIG. 2 is an entire configuration diagram of the wireless communication management system according to Embodiment 1.
FIG. 3 is a schematic configuration diagram of the wireless communication management apparatus according to Embodiment 1.
FIG. 4 is a schematic configuration diagram of the display device according to Embodiment 1.
FIG. 5 is a schematic configuration diagram of the wireless access point according to Embodiment 1.
FIG. 6 is a flowchart showing an operation of the wireless communication management apparatus according to Embodiment 1.

### DETAILED DESCRIPTION

Hereinafter, embodiments will be described in detail, with reference to the drawings when appropriate. Any explanations deemed unnecessary may be omitted. For example, detailed descriptions of well-known aspects or duplicate descriptions of substantially identical components may be omitted from this disclosure.

It is to be noted that the attached drawings and the following description are provided to enable those skilled in the art to fully understand the present disclosure, and they are not intended to limit the claimed subject matter.

### 1. Embodiment 1

### 1-1. Configuration

### 1-1-1. Configuration of Wireless Communication Management System 1

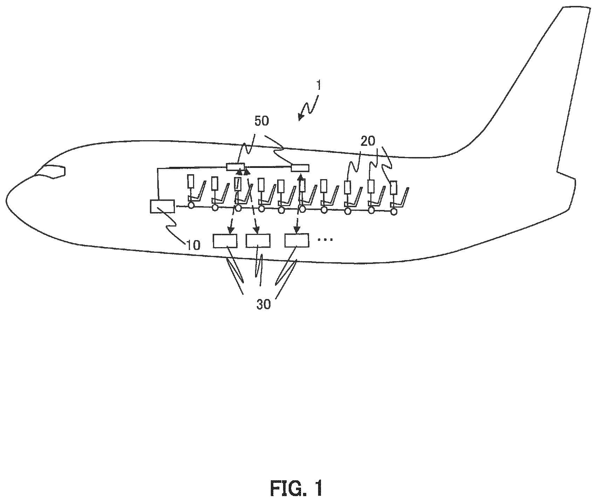

As shown in FIG. 1, the wireless communication management system 1 according to Embodiment 1 is disposed in an aircraft, which is an example of a moving object.

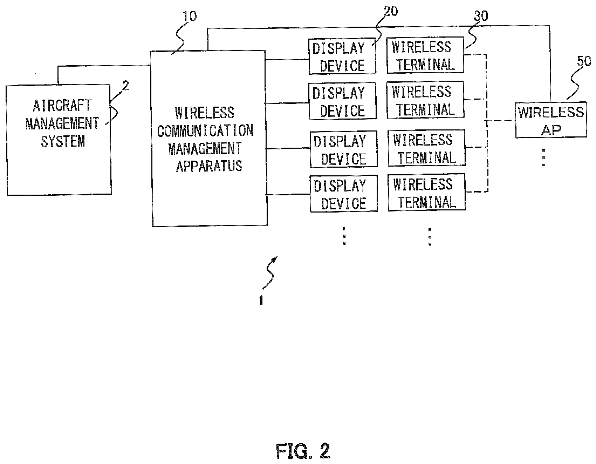

As shown in FIGS. 1 and 2, the wireless communication management system 1 includes a wireless communication management apparatus 10, a display devices 20 disposed on a seat where a passenger (hereinafter referred to as a user) is to be seated, a wireless terminal 30 used by the user, and a wireless access point (AP) 50. The wireless communication management apparatus 10 is connected to a plurality of display devices 20 via a wired cable or a distributor (not shown). A plurality of wireless access points 50 are provided according to the size of the cabin of the aircraft and the number of seats.

The wireless communication management system 1 is connectable to the aircraft management system 2, and acquires aircraft location information and the like, as will be described later. The aircraft management system 2 acquires, updates and stores management information for the aircraft. The management information includes operational information (estimated arrival time, departure time, velocity, direction of travel, etc.), location information (longitude, latitude, altitude, etc.) on the aircraft, seat information (seat number, etc.) and other such information.

The wireless communication management system 1 may function as a part of the IFE system.

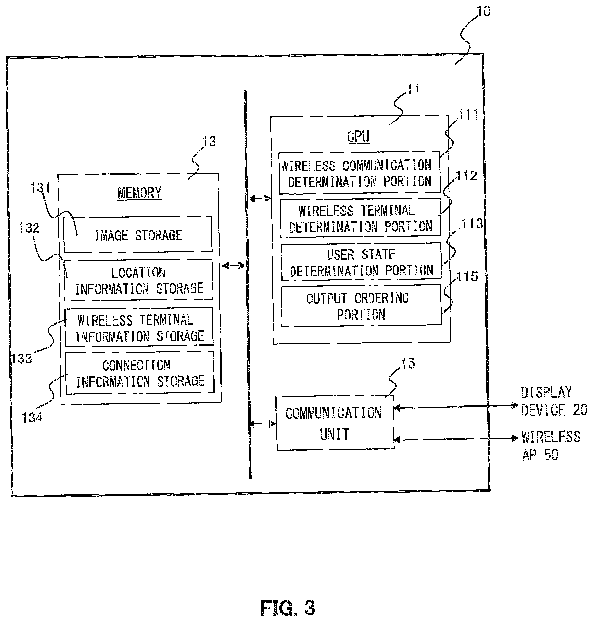

The configuration of each device included in the wireless communication management system 1 will be described below with reference to FIGS. 3 to 5.

### 1-1-2. Configuration of Wireless Communication Management Apparatus 10

The wireless communication management apparatus 10 is, for example, a computer device that functions as a server. The wireless communication management apparatus 10 is connectable to one or more display devices 20 and provides a wireless communication service to users who are seated in front of the display devices 20.

As shown in FIG. 3, the wireless communication management apparatus 10 includes a CPU 11, a memory 13 and a communication unit 15 connected to each other via a predetermined bus.

The CPU 11 (an example of a controller) implements each function of the wireless communication management apparatus 10 by executing a predetermined program. The wireless communication management apparatus 10 implements, as functions, a wireless communication determination portion 111, a wireless terminal determination portion 112, a user state determination portion 113 and an output ordering portion 115.

The wireless communication determination portion 111 determines whether wireless communication is enabled or disabled in the aircraft. Whether wireless communication is enabled or disabled is determined by, for example, the state of the aircraft, such as whether it is being takeoff or landing, or in stable flight, etc.). Whether wireless communication is enabled or disabled can be also determined by the laws and regulations of the countries that are to be applied to the aircraft. Therefore, the wireless communication determination portion 111 determines, for example, from the location information of the aircraft, whether it is currently permitted to use wireless communication within the aircraft. The location information of the aircraft may be obtained from GPS information of the aircraft.

The wireless terminal determination portion 112 determines a wireless terminal to be used by the user based on an image of the user seated in front of the display device 20. The wireless terminal determination portion 112 mainly determines the presence and type of the wireless terminal. The wireless terminal determination portion 112 determines whether or not the acquired image includes an image of a wireless terminal, based on characteristic information (shapes etc.) of various types of wireless terminals. The characteristic information is stored in memory in advance. The wireless terminal determination portion 112 further determines the type of the wireless terminal. The type of wireless terminal is, for example, whether it is a smartphone, headphones, a digital camera, a portable game terminal, a handset, a remote controller, PC or the like.

The wireless terminal determination portion 112 further determines a wireless communication system applied to the wireless terminal. The wireless communication system is, for example, Wi-Fi (registered trademark) or Bluetooth (registered trademark). For example, if the wireless terminal determined by the wireless terminal determination portion 112 is a smartphone, the wireless communication system is determined to be Wi-Fi. If the wireless terminal is headphones, the wireless communication system is determined to be Bluetooth. Alternatively, the wireless terminal determination portion 112 may determine the wireless communication system by identifying a mark for the wireless communication system within the image, such as a mark or logo indicated on the wireless terminal.

The user state determination portion 113 determines whether the user is using a wireless terminal. The user state determination portion 113 determines whether the user is using the wireless terminal from the image. The determination can be made based on, for example, whether the user is holding the wireless terminal in hand or the user is moving his hand near the wireless terminal in the image. Alternatively, the user state determination portion 113 may determine whether the user needs a wireless connection, based on the user's expression or action included in the image. For example, the user state determination portion 113 may determine that the user needs a wireless connection by judging that the user is in a state of being confused because the user does not know how to make the wireless connection setting. On the other hand, when the user state determination portion 113 determines from the image that the user is closing his/her eyes (in a sleeping state), it can determine that the user does not need a wireless connection with the user's wireless terminal. The user state determination portion 113 may also obtain the operation information of the display device 20, for example, information on whether a movie or program is being distributed to the display device 20 by IFE, based on which the state of the user can be determined. For example, during distribution of a movie or program, it may be determined that the user does not need a wireless connection with the user's wireless terminal.

The output ordering portion 115 transmits an order to a corresponding display device 20 to display connection information when wireless communication is enabled. The connection information indicates how to make a wireless connection for performing wireless communication using the user's wireless terminal. The connection information is information corresponding to the wireless terminal determined by the wireless terminal determination portion 112. More specifically, the connection information is connection information according to the wireless communication system determined by the wireless terminal determination portion 112, such as how to set ID information and a password for connecting to the wireless access point 50, or how to set pairing.

The output ordering portion 115 may transmit an order to each display device 20 to display wireless communication information indicating whether the wireless communication is enabled or disabled. The wireless communication information may include information on an access point capable of wireless communication with the wireless terminals, such as ID information and a password. The output ordering portion 115 may transmit an order to each display device 20 so as to display scheduled time when the wireless communication is enabled or when the wireless communication is disabled, based on the location information and /or the operation schedule of the aircraft.

The memory 13 includes a semiconductor memory, a flash memory, a nonvolatile memory such as an HDD, or a combination thereof. The memory 13 stores software programs used in the wireless communication management apparatus 10 and various data. In particular, the memory 13 includes an image storage 131, location information storage 132, wireless terminal information storage 133, and connection information storage 134.

The image storage 131 stores an image of the user at each seat where the display device 20 is installed. The image of the user is updated at every predetermined time. The location information storage 132 stores location information of the aircraft. The location information of the aircraft is updated at every predetermined time. The wireless terminal information storage 133 stores characteristic information (shape, etc.) according to the types of wireless terminals. These pieces of characteristic information may be updated by accumulating image information each time the number of types of wireless terminals that need to be determined increases. The connection information storage 134 stores connection information of wireless communication systems that can be applied to various types of wireless terminals.

The communication unit 15 includes a circuit for communicating with a computer device connected to the wireless communication management apparatus 10, such as a network card or a network adapter. The communication unit 15 is connected to the display devices 20 and the wireless access point 50 via a cable or the like.

### 1-1-3. Configuration of Display device 20

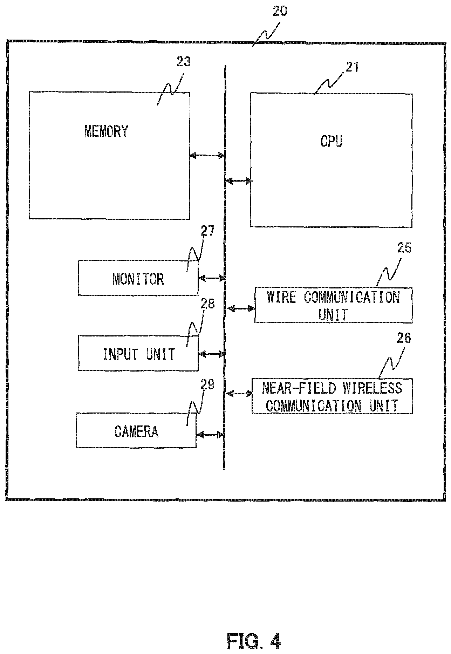

A display device 20 is installed at each seat. As shown in FIG. 4, the display device 20 includes a CPU 21, a memory 23, a wire communication unit 25, a near-field wireless communication unit 26, a monitor 27, an input unit 28, and a camera 29 for implementing the functions of the display device 20.

The CPU 21 implements each function of the display device 20 by executing a predetermined program. In response to a displaying order from the wireless communication management apparatus 10, the CPU 21 causes the monitor 27 to display information on whether the wireless communication is enabled or disabled, how to make a wireless connection with the designated wireless terminal, or the like. The CPU 21 also acquires an image of the user captured by the camera 29, which will be described later. The CPU 21 transmits the image to the wireless communication management apparatus 10 via the wire communication unit 25.

The memory 23 stores data transmitted from the wireless communication management apparatus 10 and a program for controlling the display device 20.

The monitor 27 has a display screen such as an LCD or an organic EL display. The monitor 27 is attached at such a position that the user, who is a passenger and seated, can see the monitor 27 easily. The position may be, for example, the rear portion of a seat in front of the user.

The input unit 28 is an input unit such as a touch panel displayed on the monitor 27 or a remote controller provided with operation buttons. The input unit 28 transmits information input by the user's operation to the CPU 21.

The wire communication unit 25 includes, for example, a connection terminal, and is connected to the wireless communication management apparatus 10 via a cable or the like.

The near-field wireless communication unit 26 (an example of a wireless communication unit) includes an antenna for wireless communication, a wireless circuit, or the like, and performs data communication with a wireless terminal by wireless communication at close range. For example, Bluetooth is used as a wireless communication system used in this data communication. The near-field wireless communication unit 26 is turned on or off according to an order from the wireless communication management apparatus 10. If wireless communication is disabled in the aircraft, the near-field wireless communication unit 26 is turned off, and if wireless communication is enabled, it is turned on.

The camera 29 is disposed so as to have an imaging range in front of the monitor 27. The camera 29 captures an image of the user seated in front of the monitor 27.

### 1-1-4. Configuration of Wireless Access Point 50

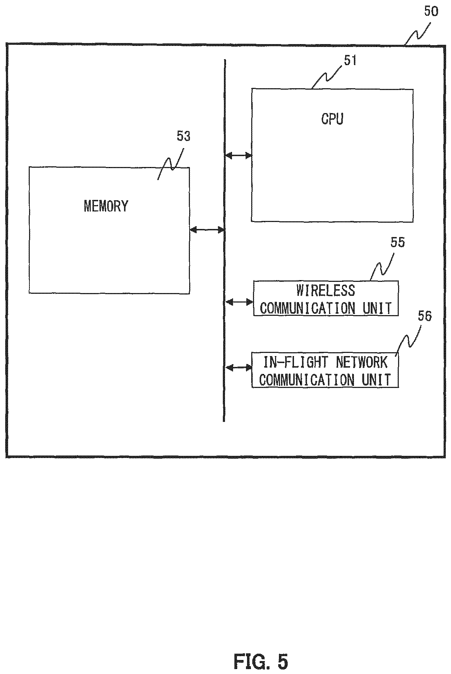

As shown in FIG. 5, the wireless access point 50 is, for example, a Wi-Fi access point. The wireless access point 50 includes a CPU 51, a memory 53, a wireless communication unit 55, and an in-flight network (NW) communication unit 56.

The CPU 51 implements each function of the wireless access point 50 by executing a predetermined program. In particular, the CPU 51 controls the wireless connection between the wireless communication unit 55 and the wireless terminal 30 to connect each wireless terminal 30 to the wireless communication management apparatus 10.

The memory 53 stores data and a program for controlling the wireless access point 50.

The wireless communication unit 55 transmits a beacon signal and establishes a wireless connection with the wireless terminal 30 when wireless communication is enabled in the aircraft.

The in-flight network communication unit 56 includes, for example, a connection terminal, and is connected to the wireless communication management apparatus 10 via a cable or the like.

The wireless access point 50 may have such a configuration that is connected to the aircraft management system 2 (FIG. 2) and connectable to the wireless communication management apparatus 10 via the aircraft management system 2.

### 1-1-5. Configuration of Wireless Terminal 30

The wireless terminal 30 is a computer terminal that the user owns or can use. The wireless terminal 30 is, for example, a computer device capable of having a wireless communication function, such as a smartphone, headphones, a digital camera, a portable game terminal, a handset, a remote controller, a PC and the like. For example, the wireless terminal 30 has a wireless communication function according to one or more wireless communication systems such as Wi-Fi and Bluetooth.

### 1-2. Operation

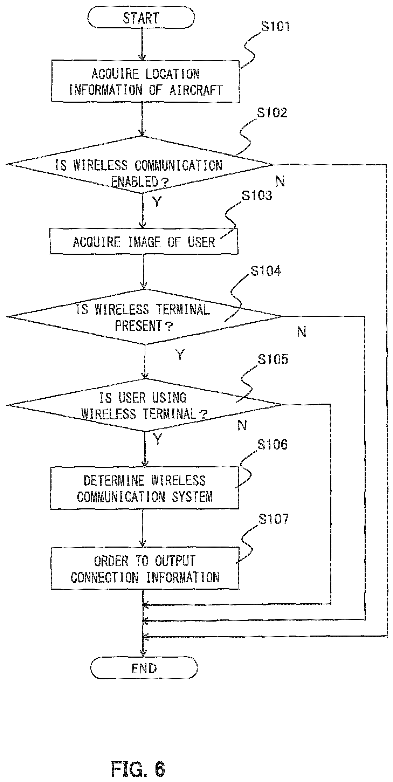

The operation of the wireless communication management apparatus 10 will be described with reference to FIG. 6.

Location information of the aircraft is acquired by the wireless communication determination portion 111 of the wireless communication management apparatus 10 (S101). Based on the location information of the aircraft, it is determined whether wireless communication is enabled (S102). For example, if the aircraft is in a state in which in-flight wireless communication may be performed in light of the law that is to be applied to the aircraft and in light of safety, the wireless communication is set to be enabled. The wireless access point 50 or the display device 20 may be given an order and set to enable or disable the wireless communication via the wireless communication management apparatus 10.

When the wireless communication is enabled (Yes in S102), the wireless terminal determination portion 112 acquires an image of the user acquired from the camera 29 of each display device 20 (S103). The wireless terminal determination portion 112 determines whether the wireless terminal 30 is present or not from the acquired image (S104). The presence or absence of the wireless terminal 30 is determined based on the characteristic information (such as a shape) of the wireless terminal 30, which is stored in advance. The wireless terminal determination portion 112 also determines the type of the wireless terminal 30. For example, it is determined that the wireless terminal 30 is a smartphone.

The user state determination portion 113 determines whether the user is using the wireless terminal 30 based on the image (S105). For example, when the user is moving his hand near the wireless terminal 30, it can be determined that the user needs a wireless connection with the wireless terminal 30.

The wireless terminal determination portion 112 determines a wireless communication system to be applied to the determined wireless terminal 30 (S106). For example, in the case of a smartphone, Wi-Fi can be determined as the wireless communication system.

The output ordering portion 115 acquires from the memory 13 connection information corresponding to the determined wireless communication system, and orders the display device 20 to display the connection information (S107). Here, the display device 20 displays information on how to make a Wi-Fi connection, such as setting ID information and a password for connecting the wireless terminal 30 to the wireless access point 50. The user can connect the wireless terminal 30 to the wireless access point 50 by operating the wireless terminal 30 at hand according to the connection information displayed on the display device 20.

On the other hand, when the wireless terminal 30 determined in step S104 is headphones, Bluetooth is determined as the wireless communication system (S106). In this case, the corresponding display device 20 displays information on how to make a Bluetooth connection, such as pairing setting.

The flowchart shown in FIG. 6 is not limited to the one described. The order of the processes may be partially exchanged or may be performed in parallel.

### 1-3. Features, etc.

In the wireless communication management apparatus 10 or the wireless management method according to Embodiment 1, an image of the user is acquired, and the type of the wireless terminal 30 used by the user is determined based on the image. When the wireless communication is enabled, the display device 20 displays connection information indicating how to make a wireless connection for performing the wireless communication using the wireless terminal 30. The connection information is information according to the determined type of the wireless terminal 30.

Even in an environment where it is difficult for the user to use the wireless communication, such as in an aircraft, the display device 20 automatically displays information on how to make a wireless connection using Wi-Fi or Bluetooth when needed by the user. This helps the user to make a wireless connection with the user's wireless terminal 30, thereby reducing stress on the user. On the other hand, it is possible to prevent giving unnecessary information and annoyance to the user who does not need a wireless connection. In addition, the cost for preparing operation manuals for the wireless communication in the aircraft can be reduced, and the crew members in the aircraft can have a less burden due to a number of inquiries from passengers.

In addition to the determination on whether the wireless terminal 30 is present or not and what the type of the wireless terminal 30 is, connection information can be displayed on the display device 20 only when it is determined that the user is using the wireless terminal 30. Therefore, the connection information can be provided only to a user who is highly likely to use the wireless communication.

### 2. Other Embodiments

The above-mentioned embodiment was described as an illustration of technology described in this application. However, the technology herein is not limited to that described above and may also be applied to embodiments in which said technology has been changed, replaced, added or omitted as needed. Moreover, components in the above-described embodiments may be combined to form new embodiments, which are not part of the present invention.
<1> The wireless communication management apparatus 10 shown in FIG. 3 may not have the function of the user state determination portion 113. In other words, step S105 of FIG. 6 may be omitted. That is, the wireless communication management apparatus 10 may transmit an order to the corresponding display device 20 to display connection information in accordance with the determination results of the wireless communication determination portion 111 and the wireless terminal determination portion 112 only.
<2> Most users using wireless communication may want to use wireless communication connected to the wireless access point 50, such as Wi-Fi. Therefore, the wireless communication management apparatus 10 shown in FIG. 3 may provide connection information of only one wireless communication system. In this case, the wireless communication management apparatus 10 may determine only whether the wireless communication is enabled in step S102 of FIG. 6 and whether the wireless terminal 30 is present in step S104. The connection system specified in step S106 is a wireless connection system using the wireless access point 50, for example, Wi-Fi. The wireless communication management apparatus 10 causes the display device 20 to display information on how to make a wireless connection according to the wireless connection system.
<3> The wireless communication system is not limited to Wi-Fi or Bluetooth as described above. Other wireless communication systems may be used.
<4> The wireless communication management apparatus 10 may determine whether the wireless communication is enabled or disabled in an aircraft, based on the flight schedule of the aircraft.
<5> The wireless terminal determination portion 112 of the wireless communication management apparatus 10 shown in FIG. 3 may estimate a direction of arrival or a strength of radio signals from the wireless terminal 30 to the display device 20, and may determine the wireless terminal 30 based on the estimation result. In this case, the CPU 21 of the display device 20 shown in FIG. 4 acquires the arrival direction and the strength of the wireless signals received by the near-field wireless communication unit 26, and transmits it to the wireless communication management apparatus 10 via the wire communication unit 25. The wireless terminal determination portion 112 of the wireless communication management apparatus 10 may determine the presence or absence of the wireless terminal 30 or the type thereof based on the acquired arrival direction or strength of the wireless signals.
<6> The wireless terminal determination portion 112 of the wireless communication management apparatus 10 shown in FIG. 3 may determine a model of the wireless terminal 30 based on the image, and the output ordering portion 115 may cause the display device 20 to output connection information according to the determined model of the wireless terminal 30. The model of the wireless terminal 30 of the same type (for example, a smartphone) differs between manufacturers or designs. In this case, as in Embodiment 1, the wireless terminal information storage 133 of the wireless communication management apparatus 10 may store characteristic information (shape, design, logo mark, etc.) according to models of the wireless terminal 30. These pieces of characteristic information may be stored and updated as the image information, every time the number of models of the wireless terminal 30 which need to be determined increases.
<7> The wireless communication management apparatus 10 shown in FIG. 3 acquires an image of the user from the camera 29 of the display device 20, but it is not limited thereto. The image of the user may be an image acquired from another camera set in the aircraft. The wireless communication management apparatus 10 may perform face recognition processing on the image acquired from each display device 20, and based on only the facerecognized image (that is, only when the user is seated at a seat), the determination on the wireless terminal 30 or the user state may be made.
<8> In Embodiment 1, some or all of the processing for each functional block may be executed by a program. Further, some or all of the processing for each functional block may be executed by a processer in a computer. The program for executing this processing may be stored in a storage device such as a hard disk or a ROM and run by being read out by the ROM or a RAM.
<9> In Embodiment 1, the processor described as a CPU or the like may be replaced with a processor that is configured as a dedicated electronic circuit designed to implement predetermined functions. Also, the processor may be configured of one or more processors. Furthermore, in the present specification, an apparatus includes the case where a plurality of constituent elements (apparatus, modules (parts), etc.) mean a group, and it does not matter whether all the constituent elements are in the same housing or not.. A "system" may refer to both a plurality of devices located in separate housings and connected to each other via a network, and one device in which a plurality of modules are located in one housing.
<10> In the above embodiments, an example in which the wireless communication management system 1 of the present disclosure is installed in an aircraft has been described. However, the present disclosure is not limited to this. The wireless communication management system 1 may be installed in another vehicle such as a helicopter, a train, a bus, or another mobile object. Furthermore, the wireless communication management system 1 may be installed in a facility or a building where wireless communication is limited according to time.

## Claims

1. A wireless communication management apparatus (10) connectable to one or more display devices (20) for providing a service of wireless communication to a user in front of the display device (20), the wireless communication management apparatus (10) comprising:
a wireless communication determination portion (111) for determining whether the wireless communication is enabled or disabled;
a memory (13) for storing characteristic information according to a type of a wireless terminal (30) and connection information, said type including any of a smartphone, a headphone, a digital camera, a portable game terminal, a handset, a remote controller, or a PC;
the connection information being information corresponding to the type of wireless terminal (30) determined by a wireless terminal determination portion (112);
an output ordering portion (115) operable to cause the display device (20) to output the connection information when the wireless communication is enabled, the connection information indicating how to make a wireless connection for performing the wireless communication using the wireless terminal (30),
**characterized by** the wireless communication management apparatus further comprising;
a communication unit (15) for acquiring an image of the user; and
the wireless terminal determination portion (112) for determining the type of the wireless terminal (30) used by the user, based on the image and the characteristic information.

2. The wireless communication management apparatus according to claim 1, wherein
the wireless communication management apparatus (10) is disposed in a moving object, and
the wireless communication determination portion (111) determines whether the wireless communication is enabled or disabled, based on location information of the moving object.

3. The wireless communication management apparatus according to any one of claims 1 to 2, wherein
the wireless terminal determination portion (112) determines a wireless communication system applied to the wireless terminal (30), and
the output ordering portion (115) causes the display device (20) to output the connection information according to the wireless communication system determined by the wireless terminal determination portion (112).

4. The wireless communication management apparatus according to any one of claims 1 to 3, wherein the output ordering portion (115) causes the display device (20) to output wireless communication information indicating whether the wireless communication is enabled or disabled.

5. The wireless communication management apparatus according to claim 4, wherein the wireless communication information includes information on an access point capable of wireless communication with the wireless terminal (30).

6. The wireless communication management apparatus according to any one of claims 1 to 5, wherein the wireless terminal determination portion (112) estimates an arrival direction of a wireless signal from the wireless terminal (30) to the display device (20), and determines the wireless terminal (30) based on the estimation result.

7. The wireless communication management apparatus according to any one of claims 1 to 6 comprising a user state determination portion (113) for determining whether the user uses the wireless terminal (30), wherein
the output ordering portion (115) causes the display device (20) to output the connection information only when the user state determination portion (113) determines that the user uses the wireless terminal (30).

8. The wireless communication management apparatus according to claim 1, wherein
the characteristic information is updated each time the number of types of wireless terminals that need to be determined increases.

9. The wireless communication management apparatus according to claim 1, wherein
the communication unit (15) is configured to acquire the image of the user, when the wireless communication is enabled.

10. A wireless communication management system comprising:
the wireless communication management apparatus (10) according to any one of claims 1 to 9;
one or more display devices (20) connectable to the wireless communication management apparatus; and
one or more wireless access points (50) connectable to the wireless communication management apparatus.

11. The wireless communication management system according to claim 10, wherein
the one or more wireless access points (50) are capable of communicating with the wireless terminal (30) by a first wireless communication system,
the display device (20) includes a wireless communication unit (26) capable of communicating with the wireless terminal (30) by a second wireless communication system different from the first wireless communication system,
the wireless terminal determination portion (112) determines whether the wireless terminal (30) is suitable for the first wireless communication system or the second wireless communication system, based on the image, and
the output ordering portion (115) causes the display device (20) to output the connection information according to the wireless communication system determined by the wireless terminal determination portion (112).

12. A wireless communication management method for providing a service of wireless communication to a user in a predetermined space, the wireless communication management method including;.
acquiring an image of the user;
determining whether the wireless communication is enabled or disabled in the predetermined space;
storing characteristic information according to a type of a wireless terminal (30) and connection information, said type including any of a smartphone, a headphone, a digital camera, a portable game terminal, a handset, a remote controller, or a PC;
determining the type of the wireless terminal (30) used by the user, based on the image and the characteristic information; and
causing a display device to output the connection information when the wireless communication is enabled, the connection information indicating how to make a wireless connection for performing the wireless communication using the wireless terminal (30),
the connection information being information corresponding to the type of the determined wireless terminal (30).

## Patentansprüche

1. Vorrichtung (10) für Verwaltung von Drahtlos-Kommunikation, die mit einer oder mehreren Anzeigeeinrichtung/en (20) zum Bereitstellen eines Drahtlos-Kommunikationsdienstes für einen Benutzer vor der Anzeigeeinrichtung (20) verbunden werden kann, wobei die Vorrichtung (10) für Verwaltung von Drahtlos-Kommunikation umfasst:
einen Abschnitt (111) für Feststellung von Drahtlos-Kommunikation, mit dem festgestellt wird, ob die Drahtlos-Kommunikation aktiviert oder deaktiviert ist;
einen Speicher (13) zum Speichern charakteristischer Informationen entsprechend einem Typ eines Drahtlos-Endgerätes (30) und Verbindungsinformationen, wobei der Typ ein Smartphone, einen Kopfhörer, eine Digitalkamera, ein tragbares Spiel-Endgerät, einen Handapparat, eine Fernbedienung oder einen PC einschließt;
wobei die Verbindungsinformationen Informationen sind, die dem durch den Abschnitt (112) für Bestimmung des Drahtlos-Endgerätes bestimmten Typ des Drahtlos-Endgerätes (30) entsprechen;
einen Abschnitt (115) zum Anweisen von Ausgabe, der in Funktion die Anzeigeeinrichtung (20) veranlassen kann, die Verbindungsinformationen auszugeben,
wenn die Drahtlos-Kommunikation aktiviert ist, wobei die Verbindungsinformationen anzeigen, wie eine Drahtlos-Verbindung zum Durchführen der Drahtlos-Kommunikation unter Verwendung des Drahtlos-Endgerätes (30) hergestellt wird,
**dadurch gekennzeichnet, dass** die Vorrichtung für Verwaltung von Drahtlos-Kommunikation des Weiteren umfasst:
eine Kommunikations-Einheit (15) zum Erfassen eines Bildes des Benutzers; sowie den Abschnitt (112) für Bestimmung des Drahtlos-Endgerätes, mit dem der Typ des von dem Benutzer verwendeten Drahtlos-Endgerätes (30) auf Basis des Bildes und der charakteristischen Informationen festgestellt wird.

2. Vorrichtung für Verwaltung von Drahtlos-Kommunikation nach Anspruch 1, wobei die Vorrichtung (10) für Verwaltung von Drahtlos-Kommunikation in einem sich bewegenden Objekt angeordnet ist, und
der Abschnitt (111) für Feststellung von Drahtlos-Kommunikation auf Basis von Standortinformationen des sich bewegenden Objektes feststellt, ob die Drahtlos-Kommunikation aktiviert oder deaktiviert ist.

3. Vorrichtung für Verwaltung von Drahtlos-Kommunikation nach einem der Ansprüche 1 bis 2, wobei
der Abschnitt (112) für Bestimmung des Drahtlos-Endgerätes ein bei dem Drahtlos-Endgerät (30) eingesetztes Drahtlos-Kommunikationssystem bestimmt, und
der Abschnitt (115) zum Anweisen von Ausgabe die Anzeigeeinrichtung (20) veranlasst, die Verbindungsinformationen entsprechend dem durch den Abschnitt (112) für Bestimmung des Drahtlos-Endgerätes bestimmten Drahtlos-Kommunikationssystem auszugeben.

4. Vorrichtung für Verwaltung von Drahtlos-Kommunikation nach einem der Ansprüche 1 bis 3, wobei der Abschnitt (115) zum Anweisen von Ausgabe die Anzeigeeinrichtung (20) veranlasst, Drahtlos-Kommunikationsinformationen auszugeben, die anzeigen, ob die Drahtlos-Kommunikation aktiviert oder deaktiviert ist.

5. Vorrichtung für Verwaltung von Drahtlos-Kommunikation nach Anspruch 4, wobei die Drahtlos-Kommunikationsinformationen Informationen über einen Zugangspunkt einschließen, der in der Lage ist, drahtlos mit dem Drahtlos-Endgerät (30) zu kommunizieren.

6. Vorrichtung für Verwaltung von Drahtlos-Kommunikation nach einem der Ansprüche 1 bis 5, wobei der Abschnitt (112) für Bestimmung des Drahtlos-Endgerätes eine Ankunftsrichtung eines Drahtlos-Signals von dem Drahtlos-Endgerät (30) an der Anzeigeeinrichtung (20) schätzt und das Drahtlos-Endgerät (30) auf Basis des Ergebnisses der Schätzung bestimmt.

7. Vorrichtung für Verwaltung von Drahtlos-Kommunikation nach einem der Ansprüche 1 bis 6, die einen Abschnitt (113) für Feststellung eines Benutzer-Status umfasst, mit dem festgestellt wird, ob der Benutzer das Drahtlos-Endgerät (30) benutzt, wobei der Abschnitt (115) zum Anweisen von Ausgabe die Anzeigeeinrichtung (20) nur dann veranlasst, die Verbindungsinformationen auszugeben, wenn der Abschnitt (113) für Feststellung eines Benutzer-Status feststellt, dass der Benutzer das Drahtlos-Endgerät (30) benutzt.

8. Vorrichtung für Verwaltung von Drahtlos-Kommunikation nach Anspruch 1, wobei die charakteristischen Informationen immer dann aktualisiert werden, wenn die Anzahl von Typen von Drahtlos-Endgeräten zunimmt, die bestimmt werden müssen.

9. Vorrichtung für Verwaltung von Drahtlos-Kommunikation nach Anspruch 1, wobei die Kommunikations-Einheit (15) so ausgeführt ist, dass sie das Bild des Benutzers erfasst, wenn die Drahtlos-Kommunikation aktiviert ist.

10. System für Verwaltung von Drahtlos-Kommunikation, das umfasst:
die Vorrichtung (10) für Verwaltung von Drahtlos-Kommunikation nach einem der Ansprüche 1 bis 9,
eine oder mehrere Anzeigeeinrichtung/en (20), die mit der Vorrichtung für Verwaltung von Drahtlos-Kommunikation verbunden werden kann/können; und
einen oder mehrere Zugangspunkt/e (50), der/die mit der Vorrichtung für Verwaltung von Drahtlos-Kommunikation verbunden werden kann/können.

11. System für Verwaltung von Drahtlos-Kommunikation nach Anspruch 10, wobei der eine oder die mehreren Zugangspunkt/e (50) in der Lage ist/sind, mittels eines ersten Drahtlos-Kommunikationssystems mit dem Drahtlos-Endgerät (30) zu kommunizieren, die Anzeigeeinrichtung (20) eine Drahtlos-Kommunikationseinheit enthält, die in der Lage ist, mittels eines zweiten Drahtlos-Kommunikationssystems, das sich von dem ersten Drahtlos-Kommunikationssystem unterscheidet, mit dem Drahtlos-Endgerät (30) zu kommunizieren,
der Abschnitt (112) für Bestimmung des Drahtlos-Endgerätes auf Basis des Bildes feststellt, ob das Drahtlos-Endgerät (30) für das erste Drahtlos-Kommunikationssystem oder das zweite Drahtlos-Kommunikationssystem geeignet ist, und
der Abschnitt (115) zum Anweisen von Ausgabe die Anzeigeeinrichtung (20) veranlasst, die Verbindungsinformationen entsprechend dem durch den Abschnitt (112) für Bestimmung des Drahtlos-Endgerätes bestimmten Drahtlos-Kommunikationssystem auszugeben.

12. Verfahren für Verwaltung von Drahtlos-Kommunikation zum Bereitstellen eines Drahtlos-Kommunikationsdienstes für einen Benutzer in einem vorgegebenen Raum, wobei das Verfahren für Verwaltung von Drahtlos-Kommunikation einschließt:
Erfassen eines Bildes des Benutzers;
Feststellen, ob die Drahtlos-Kommunikation in dem vorgegebenen Raum aktiviert oder deaktiviert ist;
Speichern charakteristischer Informationen entsprechend einem Typ eines Drahtlos-Endgerätes (30) und Verbindungsinformationen, wobei der Typ ein Smartphone, einen Kopfhörer, eine Digitalkamera, ein tragbares Spiel-Endgerät, einen Handapparat, eine Fernbedienung oder einen PC einschließt;
Feststellen des Typs des von dem Benutzer verwendeten Drahtlos-Endgerätes (30) auf Basis des Bildes und der charakteristischen Informationen; sowie Veranlassen, dass eine Anzeigeeinrichtung die Verbindungsinformationen ausgibt, wenn die Drahtlos-Kommunikation aktiviert ist, wobei die Verbindungsinformationen anzeigen,
wie eine Drahtlos-Verbindung zum Durchführen der Drahtlos-Kommunikation unter Verwendung des Drahtlos-Endgerätes (30) hergestellt wird,
wobei die Verbindungsinformationen Informationen sind, die dem Typ des bestimmten Drahtlos-Endgerätes (30) entsprechen.

## Revendications

1. Appareil de gestion de communication sans fil (10) pouvant être connecté à un ou plusieurs dispositifs d'affichage (20) pour fournir un service de communication sans fil à un utilisateur en face du dispositif d'affichage (20), l'appareil de gestion de communication sans fil (10) comprenant :
une partie de détermination de communication sans fil (111) pour déterminer si la communication sans fil est activée ou désactivée ;
une mémoire (13) pour stocker des informations caractéristiques selon un type d'un terminal sans fil (30) et des informations de connexion, ledit type comprenant l'un quelconque parmi un smartphone, un casque, un dispositif de prise de vues numérique, un terminal de jeu portable, un combiné téléphonique, une télécommande, ou un PC ;
les informations de connexion étant des informations correspondant au type de terminal sans fil (30) déterminé par une partie de détermination de terminal sans fil (112) ;
une partie d'ordre de sortie (115) opérationnelle pour amener le dispositif d'affichage (20) à délivrer en sortie les informations de connexion lorsque la communication sans fil est activée, les informations de connexion indiquant comment établir une connexion sans fil pour effectuer la communication sans fil à l'aide du terminal sans fil (30),
**caractérisé en ce que** l'appareil de gestion de communication sans fil comprend en outre :
une unité de communication (15) pour acquérir une image de l'utilisateur ; et
la partie de détermination de terminal sans fil (112) pour déterminer le type du terminal sans fil (30) utilisé par l'utilisateur, sur la base de l'image et des informations caractéristiques.

2. Appareil de gestion de communication sans fil selon la revendication 1, dans lequel l'appareil de gestion de communication sans fil (10) est disposé dans un objet en mouvement, et
la partie de détermination de communication sans fil (111) détermine si la communication sans fil est activée ou désactivée, sur la base d'informations de localisation de l'objet en mouvement.

3. Appareil de gestion de communication sans fil selon l'une quelconque des revendications 1 à 2, dans lequel
la partie de détermination de terminal sans fil (112) détermine un système de communication sans fil appliqué au terminal sans fil (30), et
la partie d'ordre de sortie (115) amène le dispositif d'affichage (20) à délivrer en sortie les informations de connexion selon le système de communication sans fil déterminé par la partie de détermination de terminal sans fil (112).

4. Appareil de gestion de communication sans fil selon l'une quelconque des revendications 1 à 3, dans lequel la partie d'ordre de sortie (115) amène le dispositif d'affichage (20) à délivrer en sortie des informations de communication sans fil indiquant si la communication sans fil est activée ou désactivée.

5. Appareil de gestion de communication sans fil selon la revendication 4, dans lequel les informations de communication sans fil comportent des informations sur un point d'accès capable d'une communication sans fil avec le terminal sans fil (30).

6. Appareil de gestion de communication sans fil selon l'une quelconque des revendications 1 à 5, dans lequel la partie de détermination de terminal sans fil (112) estime une direction d'arrivée d'un signal sans fil allant du terminal sans fil (30) au dispositif d'affichage (20), et détermine le terminal sans fil (30) sur la base du résultat d'estimation.

7. Appareil de gestion de communication sans fil selon l'une quelconque des revendications 1 à 6, comprenant une partie de détermination d'état d'utilisateur (113) pour déterminer si l'utilisateur utilise le terminal sans fil (30), dans lequel la partie d'ordre de sortie (115) amène le dispositif d'affichage (20) à délivrer en sortie les informations de connexion uniquement lorsque la partie de détermination d'état d'utilisateur (113) détermine que l'utilisateur utilise le terminal sans fil (30).

8. Appareil de gestion de communication sans fil selon la revendication 1, dans lequel les informations caractéristiques sont mises à jour à chaque fois qu'augmente le nombre de types de terminaux sans fil qui doivent être déterminés.

9. Appareil de gestion de communication sans fil selon la revendication 1, dans lequel l'unité de communication (15) est configurée pour acquérir l'image de l'utilisateur, lorsque la communication sans fil est activée.

10. Système de gestion de communication sans fil comprenant :
l'appareil de gestion de communication sans fil (10) selon l'une quelconque des revendications 1 à 9 ;
un ou plusieurs dispositifs d'affichage (20) pouvant être connectés à l'appareil de gestion de communication sans fil ; et
un ou plusieurs points d'accès sans fil (50) pouvant être connectés à l'appareil de gestion de communication sans fil.

11. Système de gestion de communication sans fil selon la revendication 10, dans lequel
les un ou plusieurs points d'accès sans fil (50) sont capables de communiquer avec le terminal sans fil (30) par un premier système de communication sans fil,
le dispositif d'affichage (20) comporte une unité de communication sans fil (26) capable de communiquer avec le terminal sans fil (30) par un second système de communication sans fil différent du premier système de communication sans fil,
la partie de détermination de terminal sans fil (112) détermine si le terminal sans fil (30) est adapté au premier système de communication sans fil ou au second système de communication sans fil, sur la base de l'image, et
la partie d'ordre de sortie (115) amène le dispositif d'affichage (20) à délivrer en sortie les informations de connexion selon le système de communication sans fil déterminé par la partie de détermination de terminal sans fil (112).

12. Procédé de gestion de communication sans fil pour fournir un service de communication sans fil à un utilisateur dans un espace prédéterminé, le procédé de gestion de communication sans fil comportant les étapes consistant à :
acquérir une image de l'utilisateur ;
déterminer si la communication sans fil est activée ou désactivée dans l'espace prédéterminé ;
stocker des informations caractéristiques selon un type d'un terminal sans fil (30) et des informations de connexion, ledit type comportant l'un quelconque parmi un smartphone, un casque, un dispositif de prise de vues numérique, un terminal de jeu portable, un combiné téléphonique, une télécommande, ou un PC ;
déterminer le type du terminal sans fil (30) utilisé par l'utilisateur, sur la base de l'image et des informations caractéristiques ; et
amener un dispositif d'affichage à délivrer en sortie les informations de connexion lorsque la communication sans fil est activée, les informations de connexion indiquant comment établir une connexion sans fil pour effectuer la communication sans fil à l'aide du terminal sans fil (30),
les informations de connexion étant des informations correspondant au type du terminal sans fil déterminé (30).
